# EUROPEAN PATENT SPECIFICATION

(11) **EP 1 788 563 B1**
(45) Date of publication and mention of the grant of the patent: **08.07.2009**
(21) Application number: 05770383.7
(22) Date of filing: 09.08.2005
(51) Int. Cl.: G11B 7/135, G11B 7/0065, G11B 7/12

(54) **HOLOGRAM REPRODUCTION HEAD**
HOLOGRAMM-WIEDERGABEKOPF
TETE DE REPRODUKTION D'HOLOGRAMME

(30) Priority: 31.08.2004 JP 2004251804
(43) Date of publication of application: 23.05.2007
(73) Proprietor: ALPS ELECTRIC CO., LTD., Tokyo 145-8501 (JP)
(72) Inventor: SOMENO, Yoshihiro, c/o Alps Electric Co., Ltd, Tokyo 145-8501 (JP); MITSUYA, Shinji, c/o Alps Electric Co., Ltd, Tokyo 145-8501 (JP)
(74) Representative: Klunker . Schmitt-Nilson . Hirsch
(86) International application number: PCT/JP2005/014555
(87) International publication number: WO 2006/025196

(56) References cited:
- EP-A- 1 282 119
- EP-A- 1 306 732
- EP-A- 1 422 698
- JP-A- 9 305 093
- JP-A- 2002 207 412
- JP-A- 2004 139 711
- US-A1- 2002 015 376
- US-A1- 2004 263 931

## Description

### Technical Field

The present invention relates to a hologram reproducing head that reproduces information recorded on a recording medium as a hologram whose pattern is difficult to counterfeit or alter and which has a large recording capacity.

### Background Art

Known hologram reproducing apparatuses reproduce information recorded on a recording medium utilizing the principle of holography. The hologram reproducing apparatuses introduce a beam having the same wavelength as a reference beam used for forming a hologram into a recording medium from the same angle and then receive reproduced light emitted therefrom with a light receiver, so that information may be reproduced from the hologram.

Such a hologram reproducing apparatus includes a light source that emits light beam, an angle adjustment mechanism that makes light beam emitted from the light source be at a predetermined angle with respect to a recording medium, and a light receiver that receives reproduced light from a hologram and then converts it into an electrical signal. A known hologram reproducing head is formed by integrating these components as disclosed in Patent Document 1 and Patent Document 2, for example.
Patent Document 1: Japanese Unexamined Patent Application Publication No. 2000-082235
Patent Document 2: Japanese Unexamined Patent Application Publication No. 2001-266399
EP 1 422 698 A2 discloses a hologram reproducing head according to the preamble of claim 1.

### Disclosure of Invention

### Problems to be Solved by the Invention

The known hologram reproducing head, however, has the following problem. A recording device using the principle of holography has a feature in which, because holograms may be recorded in multiple on a recording medium, the recording density may be increased. However, the known hologram reproducing head is not capable of separately reproducing the holograms recorded in multiple. Therefore, holograms are disposed separately from each other in the recording medium, so that it has been difficult to improve its recording density.

An purpose of the present invention is to take into consideration the above-mentioned problem and to provide a hologram reproducing head capable of reproducing information from a recording medium that includes holograms formed in high density with a simple structure.

### Means of Solving the Problem

To solve the above problem, the present invention provides a hologram reproducing head that reproduces information recorded as a hologram on a recording medium. The hologram reproducing head comprises a light source that emits a reference beam used for reproducing the hologram and a light receiver that receives reproduced light from the hologram. Both of the light source and the light receiver are disposed on one substrate. The hologram reproducing head further includes a transparent plate that is opposed to the substrate and transmits light beam from the light source and the reproduced light. The transparent plate includes an optical path changing hologram that is located at a position opposed to the light source in order to diffract the reference beam and then introduce the reference beam into the hologram. A pinhole filter is provided on the surface of the transparent plate at a position where the reproduced light from the hologram is transmitted.

The hologram reproducing head according to the present invention also provides a feature in which the optical path changing hologram splits the reference beam into two branched beams, one branched beam enters the hologram to become reproduced light and then enters the light receiver, the other branched beam enters a position controlling hologram formed on the recording medium to become position controlling information light and then enters the light receiver.

The hologram reproducing head according to the present invention further provides a feature in which a pinhole filter composed by an opaque film made of a light blocking material is formed on the surface of the transparent plate around the position where the reproduced light from the hologram is transmitted.

The hologram reproducing head according to the present invention yet further provides a feature in which the pinhole filter is located at a beam waist position of the reproduced light from the hologram. Advantageous Effect of the Invention

In the hologram reproducing head according to the present invention, the light source that emits a reference beam and the light receiver that receives reproduced light are disposed on one substrate. The transparent plate is opposed to the substrate and transmits beam from the light source and the reproduced light. The transparent plate is provided with the optical path changing hologram located at the position opposed to the light source. The optical path changing hologram diffracts the reference beam and then introduces the reference beam into the hologram. Thus, integration of the hologram reproducing apparatus may be realized with a simple structure. In addition, the pinhole filter is provided on the surface of the transparent plate at the position where the reproduced light from the hologram is transmitted, so that, when holograms are recorded in overlapped situation, only the reproduced light from a predetermined hologram may be taken out separately. This allows holograms to be formed in high density on a recording medium and makes it possible to have a higher recording density of information.

Furthermore, in the hologram reproducing head according to the present invention, the optical path changing hologram splits the reference beam into two branched beams, one branched beam enters the hologram to become reproduced light and the other branched beam enters a position controlling hologram formed on the recording medium to become position controlling information light. Thus, focusing and positioning may be performed with a simple structure.

Moreover, in the hologram reproducing head according to the present invention, the pinhole filter is formed so that the opaque film made of a light blocking material is formed on the surface of the transparent plate around the position where the reproduced light from the hologram is transmitted. This makes it possible to form a pinhole filter by forming a film on the surface of the transparent plate, so that manufacturing may be made easier.

Furthermore, in the hologram reproducing head according to the present invention, the pinhole filter is located at the beam waist position of the reproduced light from the hologram. This reliably blocks the reproduced lights emitted from overlapped holograms.

### Brief Description of the Drawings

Fig. 1 is a block diagram of a hologram reproducing head according to a first embodiment.
Fig. 2 is a block diagram of a hologram reproducing head according to a second embodiment.
Fig. 3 is a block diagram of a hologram reproducing head according to a third embodiment.

### Reference Numerals

- 1: head body
- 2: substrate
- 3: light source
- 4: light receiver
- 5: transparent plate
- 5a: optical path changing hologram
- 6: film
- 6a: pinhole filter
- 10: recording medium
- 11: hologram
- 12: position controlling hologram

### Best Mode for Carrying Out the Invention

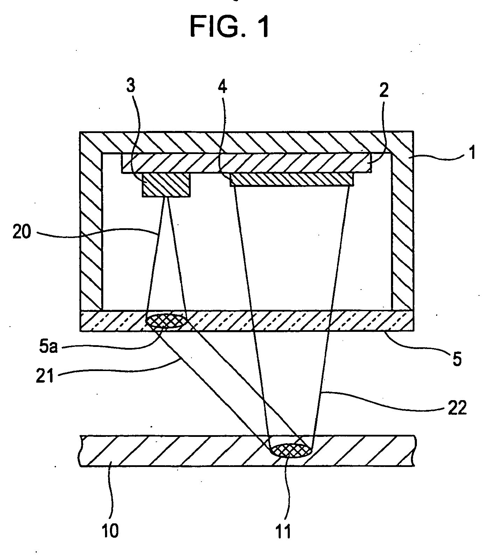

Embodiments of the present invention will be described in detail with reference to the drawings. Fig. 1 is a block diagram of a hologram reproducing head according to a first embodiment. As shown in the drawing, the hologram reproducing head of this embodiment includes a light source 3 that radiates a laser beam and a light receiver 4 that receives light and then converts the light into an electrical signal, both of which are contained in a box-shaped head body 1, and further includes a transparent plate 5 opposed to the light source 3 and the light receiver 4.

A substrate 2 is provided on one of the inner surfaces of the head body 1. The light source 3 and the light receiver 4 are disposed on the substrate 2. A surface opposed to the surface on which the substrate 2 is provided is formed of the transparent plate 5. The transparent plate 5 transmits an emitting beam 20 from the light source 3 and reproduced light 22 from a hologram 11 which will be described later.

An optical path changing hologram 5a is formed on the transparent plate 5 at a position where the emitting beam 20 from the light source 3 enters. The optical path changing hologram 5a serves to diffract the emitting beam 20 from the light source 3 toward the hologram 11. The emitting beam 20 that has been diffracted to change its angle enters the hologram 11 as a reference beam 21. The optical path changing hologram 5a is formed by interference of an object beam and a reference beam. As the object beam, a beam having the same angle and the same wavelength as the reference beam 21 shown in Fig. 1 is used. As the reference beam, a beam having the same angle and the same wavelength as the emitting beam 20 shown in Fig. 1 is used.

The head body 1 is opposed to a recording medium 10. The recording medium 10 has a plate-like shape in the form of disc or card. The hologram 11 is formed on the recording medium 10 by means of interference of an object beam and a reference beam. By forming the hologram 11 using the object beam that has been encoded, the hologram 11 has predetermined information.

An optical path in the above structure will be described. The emitting beam 20 radiated from the light source 3 is divergent light, which enters the optical path changing hologram 5a of the transparent plate 5 that is opposed to the light source 3. The emittng beam 20 from the light source 3 is diffracted by the optical path changing hologram 5a to change its angle to become the reference beam 21. The reference beam 21 enters the hologram 11 of the recording medium 10 at a predetermined angle and is diffracted to become the reproduced light 22.

The reproduced light 22 that exits the hologram 11 toward the head body 1 is transmitted through the transparent plate 5 and then enters the light receiver 4.
The light receiver 4 that has received the reproduced light 22 is capable of reading information recorded in the hologram 11 by means of conversion of an optical signal into an electrical signal.

The light source 3 and the light receiver 4 are integrated with the head body 1 via the substrate 2. The optical path changing hologram 5a is also integrated with the head body 1 via the transparent plate 5. Thus, the whole hologram reproducing apparatus may be unitized with a simple structure. When a plurality of the holograms 11 are formed on the recording medium 10, information may be read from each of the holograms 11 by moving the head body 1 by means of an actuator such as a slider.

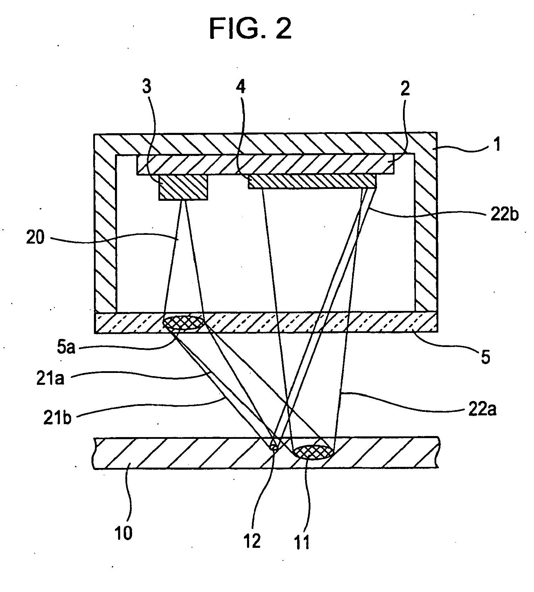

A second embodiment of the present invention will now be described. Fig. 2 is a block diagram of a hologram reproducing head according to a second embodiment. As shown in the drawing, the structure of the head body 1, the light source 3, and the light receiver 4 in this embodiment is the same as that of the first embodiment. On the other hand, the optical path changing hologram 5a formed on the transparent plate 5 is different from that of the first embodiment.

The optical path changing hologram 5a in this embodiment diffracts the emitting beam 20 from the light source 3 and splits it into two branched beams. One branched beam is a reference beam 21a that enters the hologram 11 on the recording medium 10, and the other branched beam is a branched beam 21b that enters a position controlling hologram 12 formed adjacent to the hologram 11 in the recording medium 10.

The reference beam 21a enters the hologram 11 and is diffracted to become reproduced light 22a and then enters the light receiver 4 through the transparent plate 5. The branched beam 21b enters the position controlling hologram 12 and is diffracted to become reproduced light 22b and then enters the light receiver 4 through the transparent plate 5. The reproduced light 22b from the position controlling hologram 12 may be used for positioning and focusing of the head body 1 with respect to the hologram 11.

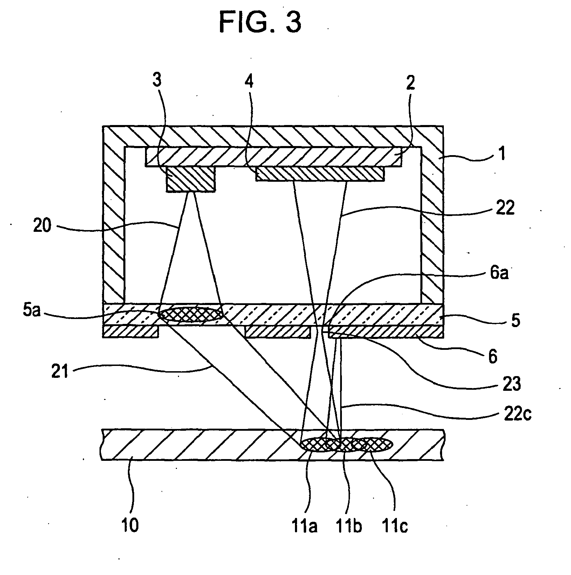

A third embodiment of the present invention will now be described. Fig. 3 is a block diagram of a hologram reproducing head according to a third embodiment. As shown in the drawing, the structure of the head body 1, the light source 3, and the light receiver 4 in this embodiment is also the same as that of the first embodiment. It is also the same in that the transparent plate 5 is opposed to the substrate 2 on which the light source 3 and the light receiver 4 are disposed.

In this embodiment, an opaque film 6 is provided on the surface of the transparent plate 5. The film 6 may be one that can be formed on the transparent plate 5 and that has a light blocking property. For example, a metal film may be employed. Note that the film 6 has openings through which the reference beam 21 that exits the optical path changing hologram 5a and the reproduced light 22 that exits the hologram 11 are transmitted.

In particular, the opening that allows the reproduced light 22 of the hologram 11 to pass therethrough is formed as a pinhole filter 6a. The hologram 11 is formed so that the reproduced light 22 has a beam waist 23, and is configured so that the beam waist 23 is located at the position of the pinhole filter 6a. This allows lights from each of the holograms 11 to be separated, even when the holograms 11 are formed in the recording medium 10 so that they are partially overlapped. This will be described in the following.

As shown in Fig. 3, holograms 11a, 11b, and 11c are formed in the recording medium 10 so that they are partially overlapped with each other. The optical path changing hologram 5a that diffracts the emitting beam 20 from the light source 3 causes the reference beam 21 that exits therefrom to become a convergent beam. The reference beam 21 enters the hologram 11a to emit the reproduced light 22. At the same time, reproduced light 22c is emitted from a portion of the hologram 11b that is overlapped with the hologram 11a.

Because the reference beam 21 that enters the hologram 11a is a convergent beam, its angle varies from one position to another. The hologram 11a is formed so that each of the positions corresponds to the respective angle of the reference beam 21, and the reproduced light 22 emitted therefrom is configured so that the position of the beam waist 23 is located at the position of the pinhole filter 6a. On the other hand, since the reference beam 21 enters the portion of the hologram 11b that is overlapped with the hologram 11a at an angle that is different from the angle of a proper reference beam, the reproduced light 22c emitted therefrom exits at an angle that is different from a desired angle. Thus, the reproduced light 22c from the hologram 11b cannot pass through the pinhole filter 6a, and the reproduced light 22c is blocked by the film 6.

In order to reproduce the hologram 11b, it is only necessary to move the head body 1 and allow the reference beam 21 at each position thereof to enter the hologram 11b at a respective predetermined angle. In this case, in the other way round, reproduced light is emitted from a portion of the hologram 11a that is overlapped with the hologram 11b. This reproduced light exits at an angle that is different from a desired angle, so that it does not pass through the pinhole 6a and is blocked by the film 6. Similarly, the hologram 11c may also be reproduced by moving the head body 1 parallel.

In this manner, by providing the pinhole filter 6a, even when the holograms 11 are formed so that they are partially overlapped, reproduced light can be obtained from each of the holograms 11, 11, with the result that the holograms 11 may be formed in high density in the recording medium 10. In addition, since the pinhole filter 6a is formed as an opening of the film 6 that is formed on the surface of the transparent plate 5, it may be integrated and - easily manufactured with the light source 3, the light receiver 4, and the optical path changing hologram 5a, thus making it possible to provide a smaller and cheaper hologram reproducing head.

It should be noted that in this embodiment as in the case of the second embodiment, the optical path changing hologram 5a may be configured to split the emitting beam 20 into the reference beam 21 that reproduces the hologram 11 and the branched beam 21b that reproduces the position controlling hologram 12. In this case, the film 6 should have an opening that allows the reproduced light 22b from the position controlling hologram 12 to pass therethrough in addition to the pinhole filter 6a.
While the present invention is described above with reference to embodiments, the present invention is not limited to these embodiments, and various modifications may be applicable without departing from the scope of the invention, the scope of the invention being defined by the appended claims.

### Industrial Applicability

The present invention relates to a hologram reproducing head that reproduces information recorded on a recording medium as a hologram, the head being particularly useful as a hologram reproducing head having a unitized structure.

## Claims

1. A hologram reproducing head that reproduces information recorded in a hologram (11) on a recording medium (10), comprising:
a light source (3) that emits a reference beam (21) that reproduces the hologram (11);
a light receiver (4) that receives reproduced light (22) from the hologram (11), and
a pinhole filter (6a) located at a beam waist position (23) of the reproduced light (22) from the hologram (11); **characterized in that**
the light source (3) and the light receiver (4) are disposed on one substrate (2);
a transparent plate (5) is opposed to the substrate (2) in order to transmit light from the light source (3) and the reproduced light (22), wherein the transparent plate (5) includes an optical path changing hologram(5a) that is located at a position opposed to the light source (3) and that diffracts the reference beam (21) and then introduces the reference beam (21) into the hologram (11); and
the pinhole filter (6a) is provided on the surface of the transparent plate (5) at a position where the reproduced light (22) from the hologram (11) is transmitted.

2. The hologram reproducing head according to claim 1, **characterized in that** the pinhole filter (6a) is formed so that an opaque film made of a light blocking material is formed on the surface of the transparent plate (5) around the position where the reproduced light from the hologram (11) is transmitted.

3. The hologram reproducing head according to claim 1 or 2, **characterized in that** the optical path changing hologram (5a) splits the reference beam (21) into two branched beams (21a, 21b), one branched beam (21a) enters the hologram (11) to be reproduced light and then enters the light receiver (4), and the other branched beam (21b) enters a position controlling hologram (12) formed on the recording medium (10) to become position controlling information light (22b) and then enters the light receiver (4).

## Patentansprüche

1. Hologramm-Wiedergabekopf, der in einem Hologramm (11) auf einem Aufzeichnungsmedium (10) aufgezeichnete Information reproduziert, aufweisend:
eine Lichtquelle (3), die einen Referenzstrahl (21) aussendet, der das Hologramm (11) reproduziert;
einen Lichtempfänger (4), der reproduziertes Licht (22) von dem Hologramm (11) empfängt, und
ein Lochblendenfilter (6a), das sich an einem Strahl-Verengungsbereich (23) des reproduzierten Lichts (22) von dem Hologramm (11) befindet;
**dadurch gekennzeichnet, dass** die Lichtquelle (3) und der Lichtempfänger (4) auf einem einzigen Substrat (2) angeordnet sind;
dass eine transparente Platte (5) dem Substrat (2) gegenüberliegend angeordnet ist, um Licht von der Lichtquelle (3) und das reproduzierte Licht (22) zu übertragen, wobei die transparente Platte (5) ein den Lichtweg änderndes Hologramm (5a) beinhaltet, das sich an einer der Lichtquelle (3) gegenüberliegenden Stelle befindet und das den Referenzstrahl (21) beugt und den Referenzstrahl (21) dann in das Hologramm (11) einleitet; und
dass das Lochblendendfilter (6a) auf der Oberfläche der transparenten Platte (5a) an einer Stelle vorgesehen ist, an der das reproduzierte Licht (22) von dem Hologramm (11) übertragen wird.

2. Hologramm-Wiedergabekopf nach Anspruch 1,
**dadurch gekennzeichnet, dass** das Lochblendenfilter (6a) derart ausgebildet ist, dass eine aus einem lichtblockierenden Material gebildete opake Schicht auf der Oberfläche der transparenten Platte (5) um die Stelle herum ausgebildet ist, an der das reproduzierte Licht von dem Hologramm (11) übertragen wird.

3. Hologramm-Wiedergabekopf nach Anspruch 1 oder 2,
**dadurch gekennzeichnet, dass** das den Lichtweg ändernde Hologramm (5a) den Referenzstrahl (21) in zwei Zweigstrahlen (21 a, 21 b) teilt, wobei der eine Zweigstrahl (21) in das Hologramm (11) eintritt, um reproduziertes Licht zu werden, und dann in den Lichtempfänger (4) eintritt, und wobei der andere Zweigstrahl (21 b) in ein auf dem Aufzeichnungsmedium (10) gebildetes Positionssteuer-Hologramm (12) eintritt, um Positionssteuer-Informationslicht (22b) zu werden, und dann in den Lichtempfänger (4) eintritt.

## Revendications

1. Tête de reproduction d'hologramme reproduisant sur un support d'enregistrement (10) des informations enregistrées dans un hologramme (11), comprenant :
une source de lumière (3) qui émet un faisceau de référence (21) qui reproduit l'hologramme (11) ;
un photorécepteur (4) qui reçoit de l'hologramme (11) de la lumière reproduite (22), et
un filtre (6a) à trous d'épingles situé à un emplacement d'étranglement (23) de faisceau de la lumière reproduite (22) provenant de l'hologramme (11); **caractérisée en ce que**
la source de lumière (3) et le photorécepteur (4) sont disposés sur un même substrat (2) ;
une plaque transparente (5) est en regard du substrat (2) afin d'émettre de la lumière venant de la source de lumière (3) et la lumière reproduite (22), la plaque transparente (5) comportant un hologramme (5a) de changement de trajet optique, qui est situé à un emplacement en regard de la source (de lumière (3) et qui diffracte le faisceau de référence (21) puis introduit le faisceau de référence (21) dans l'hologramme (11) ; et
le filtre (6a) à trous d'épingles est disposé à la surface de la plaque transparente (5) à un emplacement où est émise la lumière reproduite (22) venant de l'hologramme (11).

2. Tête de reproduction d'hologramme selon la revendication 1, **caractérisée en ce que** le filtre (6a) à trous d'épingles est formé de façon qu'un film opaque en matière arrêtant la lumière soit formé à la surface de la plaque transparente (5) autour de l'emplacement où est émise la lumière reproduite venant de l'hologramme (11).

3. Tête de reproduction d'hologramme selon la revendication 1 ou 2, **caractérisée en ce que** l'hologramme (5a) de changement de trajet optique divise le faisceau de référence (21) en deux ramifications (21a, 21b) de faisceau, une première ramification (21a) de faisceau entre dans l'hologramme (11) pour être de la lumière reproduite, puis entre dans le photorécepteur (4), et l'autre ramification (21b) de faisceau entre dans un hologramme (12) de commande de position formé sur le support d'enregistrement (10) pour devenir de la lumière (22b) d'information de commande de position, puis entre dans le photorécepteur (4).
